# FASCICULE DE BREVET EUROPEEN

(11) **EP 2 116 423 B1**
(45) Date de publication et mention de la délivrance du brevet: **15.06.2011**
(21) Numéro de dépôt: 09159568.6
(22) Date de dépôt: 06.05.2009
(51) Int. Cl.: B60R 13/08

(54) **Pièce d'isolation acoustique pour obturer un orifice**
Schalldämmteil zum Verschließen einer Öffnung
Soundproofing element for blocking an orifice

(30) Priorité: 06.05.2008 FR 0853005
(43) Date de publication de la demande: 11.11.2009
(73) Titulaire: Sofitec SA, 78530 Buc (FR)
(72) Inventeur: Proux, Olivier, 78220, VIROFLAY (FR)
(74) Mandataire: Bloch & Bonnétat

(56) Documents cités:
- EP-A- 1 298 036
- EP-A- 1 775 169
- FR-A- 2 906 637

## Description

La présente invention concerne une pièce d'isolation acoustique pour obturer un orifice qui peut être réalisé par exemple par l'assemblage de plusieurs tôles. En particulier l'orifice est ménagé à proximité d'une aile de la carrosserie d'un véhicule automobile et la pièce est adaptée à isoler acoustiquement l'habitacle du véhicule du bruit engendré par exemple par la rotation de la roue correspondante dans le passage de roue sous l'aile.

On connaît déjà une telle pièce d'isolation acoustique comprenant deux éléments en matière thermoplastique, p. ex. décrite dans la demande EP-1 775 169 A1.

Un premier élément est obtenu par injection de matière thermoplastique et est dur et rigide. La forme du premier élément est exactement complémentaire de la forme de l'orifice dans lequel la pièce doit être encastrée. Le deuxième élément est rapporté par superposition et collage sur le pourtour du premier élément pour constituer une lèvre sensiblement saillante jouant le rôle de joint entre le premier élément et les parois de l'orifice. La matière thermoplastique du deuxième élément est du caoutchouc naturel ou synthétique, ou une mousse de caoutchouc synthétique de type monomère d'éthylène-propylène-diène EPDM.

Ce type de pièce se révèle être trop rigide et sa surface à appliquer contre les parois de l'orifice trop dure pour pouvoir absorber les intervalles de tolérance de positionnement des tôles. Il est donc difficile d'appliquer partout la pièce en contact intime sur les parois de l'orifice ce qui conduit à une isolation acoustique insatisfaisante. De plus à cet inconvénient s'ajoutent les coûts élevés des outils utilisés pour l'injection de matière thermoplastique.

Il existe également des pièces d'isolation acoustique thermoformées en une seule matière pour obturer des orifices dans des ailes de véhicule. Mais ces pièces ont pour inconvénient soit d'avoir de bonnes caractéristiques d'isolation acoustique, c'est-à-dire une masse élevée et donc une grande rigidité pour constituer un joint d'isolation acoustique, soit de constituer un joint parfait avec l'orifice et donc être très souples et de masse peu élevée ce qui engendre une faible isolation acoustique. Si un niveau d'isolation acoustique important est requis, une telle pièce présente alors une masse trop grande et une rigidité trop élevée et ne peut être utilisée.

La présente invention a pour but de proposer une pièce composite d'isolation acoustique qui est simple, efficace et peu coûteuse tout en remédiant aux inconvénients des pièces connues présentées ci-dessus et en améliorant l'étanchéité acoustique de l'orifice obturé par la pièce d'isolation acoustique.

A cette fin, une pièce d'isolation acoustique pour obturer un orifice comprend un premier élément en une matière thermoplastique conférant de la rigidité à la pièce et un deuxième élément en matière thermoplastique plus souple superposé au premier élément, la matière thermoplastique du deuxième élément résultant d'un thermoformage et au moins une partie d'une face du deuxième élément étant intimement liée à une face du premier élément. La pièce d'isolation acoustique est caractérisée en ce que le deuxième élément comprend un rebord ayant au moins une partie ne recouvrant pas le premier élément.

Ladite au moins une partie du rebord du deuxième élément ne recouvrant pas le premier élément est ainsi libre d'une quelconque liaison au premier élément plus rigide assurant l'obturation grossière de l'orifice, et peut être soumise à une contrainte supplémentaire contre une paroi de l'orifice pour s'adapter plus précisément à la surface irrégulière de la paroi de l'orifice et mieux adhérer à celle-ci ce qui améliore l'étanchéité acoustique de l'orifice obturé. Selon l'étanchéité acoustique visée et la configuration de l'orifice à obturer, une ou plusieurs parties appropriées du rebord du deuxième élément, ou tout le rebord du deuxième élément, faisant office de joint d'étanchéité acoustique, peuvent ne pas recouvrir le premier élément.

La souplesse du deuxième élément peut être conférée par une masse surfacique de la matière thermoplastique du deuxième élément plus faible que celle du premier élément. Par exemple le deuxième élément est en une mousse de polyoléfine dont la masse surfacique est plus faible que la masse surfacique du premier élément, par exemple en une mousse de polyoléfine. Grâce à la souplesse du deuxième élément et à ladite au moins une partie du rebord du deuxième élément ne recouvrant pas le premier élément, le deuxième élément peut être plaqué contre les parois de l'orifice en épousant les irrégularités du contour de l'orifice ainsi que les intervalles de tolérance de positionnement des tôles constitutives dudit orifice. L'isolation acoustique est alors renforcée comparativement à une pièce d'isolation acoustique selon la technique antérieure.

L'invention a aussi pour objet un procédé de fabrication d'une pièce d'isolation acoustique pour obturer un orifice comprenant un premier élément en une matière thermoplastique conférant de la rigidité à la pièce et un deuxième élément en matière thermoplastique plus souple superposé au premier élément, qui est caractérisé en ce qu'il comprend un positionnement du premier élément dans un moule, un thermoformage de la matière thermoplastique plus souple ayant une masse surfacique plus faible que celle du premier élément sur le premier élément pour produire le deuxième élément, et une liaison intime d'une face du premier élément à au moins une partie d'une face du deuxième élément comprenant un rebord ayant au moins une partie ne recouvrant pas le premier élément.

Selon une autre réalisation du procédé de fabrication de la pièce d'isolation acoustique pour obturer un orifice comprenant un premier élément en une matière thermoplastique conférant de la rigidité à la pièce et un deuxième élément en matière thermoplastique plus souple superposé au premier élément, les matières du premier élément et du deuxième élément sont convoyées l'une au-dessus de l'autre et subissent simultanément une découpe et un thermoformage avec une thermosoudure entre elles, c'est-à-dire une thermosoudure d'une face du deuxième élément à une face du premier élément, au cours d'une seule opération, le deuxième élément comprenant un rebord ayant au moins une partie ne recouvrant pas le premier élément.

Le procédé peut aussi comprendre une thermocompression au moins d'une partie de la matière thermoplastique du deuxième élément.

Le thermoformage ou la thermocompression du deuxième élément faisant office de joint souple d'étanchéité acoustique sur le premier élément faisant office de squelette rigidifiant la pièce offre un gain économique en comparaison aux coûts des outils utilisés pour l'injection du deuxième élément des pièces composites d'isolation acoustique selon la technique antérieure. Si le premier élément est par exemple en matière thermoplastique injectée, ou si les matières des premier et deuxième éléments ont des points de fusion différents, les éléments de la pièce peuvent être reliés par fusion des matières thermoplastiques, ou par flammage de l'une des faces en contact des éléments, ou par application d'un agent adhésif sur l'une des faces en contact des éléments pour qu'au moins une partie d'une face du deuxième élément soit intimement liée à une face du premier élément.

D'autres caractéristiques et avantages de la présente invention apparaîtront plus clairement à la lecture de la description suivante de plusieurs réalisations de l'invention données à titre d'exemples non limitatifs, en référence aux dessins annexés correspondants dans desquels :
- la figure 1 est une vue en perspective partiellement écorchée d'une pièce d'isolation acoustique selon une première réalisation de l'invention, dont le deuxième élément comporte un rebord ayant une partie longitudinale ne recouvrant pas le premier élément ;
- la figure 2 est une section de la pièce prise le long du plan II-II de la figure 1 traversant un trou, la pièce étant placée dans un orifice ;
- la figure 3 est une section de la pièce prise le long du plan III-III de la figure 1 traversant deux cavités ;
- la figure 4 est une section similaire à la figure 2 relative à une pièce selon une deuxième réalisation de l'invention, dont le deuxième élément comporte un rebord ayant au moins deux parties longitudinales ne recouvrant pas le premier élément ; et
- la figure 5 est une section similaire à la figure 2 relative à une pièce selon une troisième réalisation de l'invention, dont le deuxième élément comporte un rebord ayant au moins une partie transversale ne recouvrant pas le premier élément.

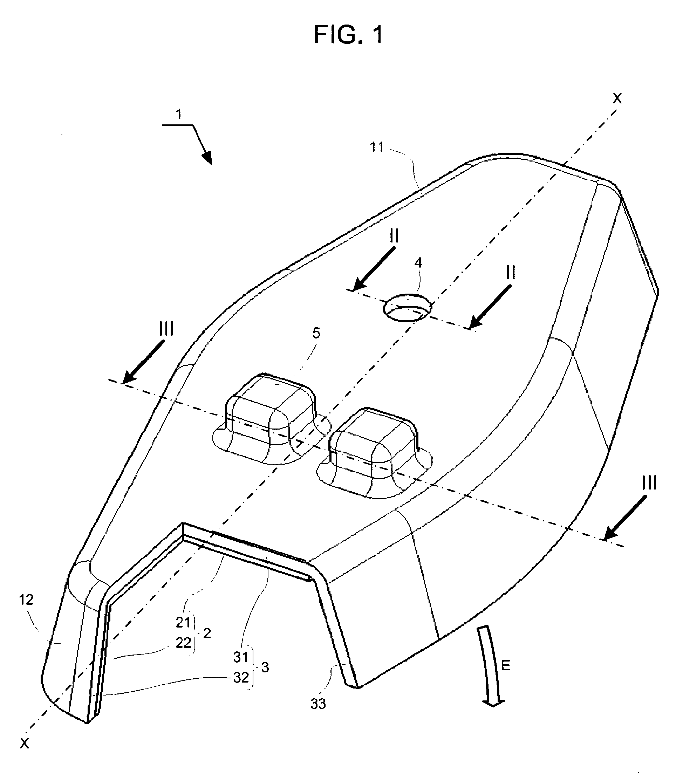

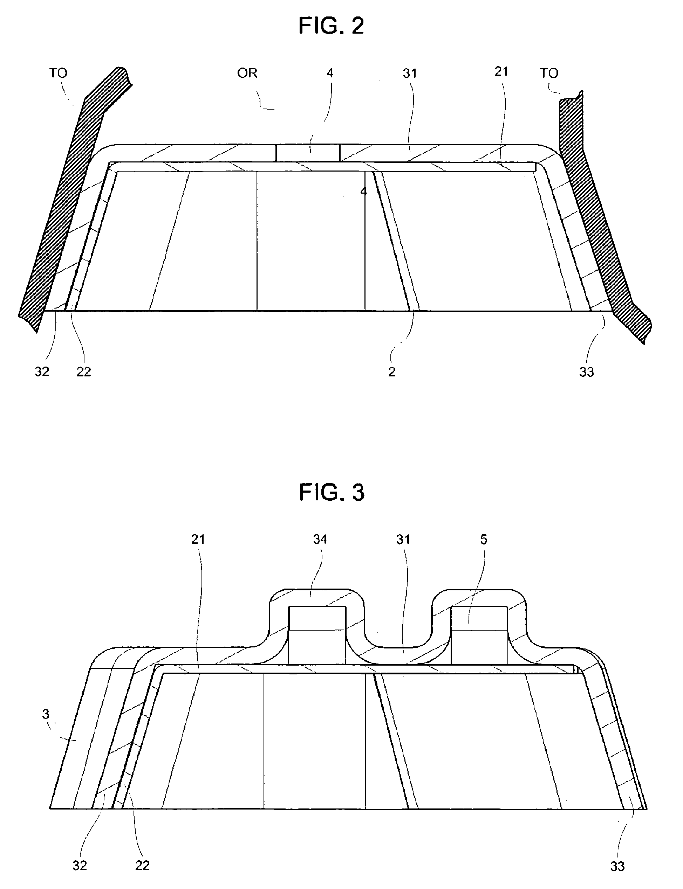

En référence à la figure 1, une pièce d'isolation acoustique 1 selon l'invention est par exemple en forme de cuvette évasée ayant un fond 11 sensiblement plan et un côté périphérique 12. Le fond 11 montré en partie supérieure dans la figure 1 est par exemple sensiblement hexagonal avec quatre grands côtés légèrement inclinés par rapport à un plan axial longitudinal XX de la pièce. Le côté périphérique 12 est sensiblement pyramidal tronqué avec le fond 11 comme petite base. Par exemple comme montré en coupe à la figure 2, la pièce d'isolation 1 est destinée à obturer un orifice OR ménagé dans de la tôle emboutie TO constituant une aile avant ou arrière de la carrosserie d'un véhicule automobile pour réaliser une isolation acoustique entre le passage de roue correspondant et l'habitacle du véhicule.

La pièce d'isolation 1 est composée de deux éléments superposés en des matières thermoplastiques 2 et 3.

L'élément 2 constitue un squelette qui est fabriqué en une matière thermoplastique plus rigide, par exemple une mousse de polyoléfine telle qu'une mousse de polypropylène, de masse surfacique plus élevée que l'autre élément 3 ce qui confère la tenue et la rigidité à la pièce. La masse surfacique moins élevée de l'autre élément 3 est comprise entre 10% environ et 80% environ de la masse surfacique de l'élément 2. L'élément 3 est composé d'un matériau moins rigide, par exemple une mousse de polyoléfine telle qu'une mousse de polyéthylène, et constitue un joint souple notamment au regard de l'isolation acoustique de l'habitacle du véhicule.

Par exemple le squelette 2 en une mousse de polyoléfine constitue une grande proportion de la masse de la pièce. Le squelette 2 est conformé grossièrement, par exemple par injection, thermoformage ou thermocompression, d'une manière complémentaire au moins partiellement à la forme du logement tel que l'orifice OR apte à recevoir la pièce 1. Comme on le déduit à partir de l'écorchée de la figure 1, le squelette 2 a un fond 21 avec un contour similaire au contour d'une section transversale de l'orifice OR et un rebord périphérique 22 qui est apte à longer au moins une partie des côtés de l'orifice OR. Le rebord 22 est sensiblement parallèle aux parois correspondantes de l'orifice OR dans la tôle.

Le joint souple 3, par exemple en une mousse de polyoléfine réticulée, de masse surfacique plus faible que celle du squelette plus rigide est thermoformé et intimement lié au squelette. Le joint souple est conformé d'une manière complémentaire aux caractéristiques de forme du logement tel que l'orifice OR apte à recevoir la pièce 1. Selon la l'adaptation de la pièce 1 à la configuration de l'orifice OR, le joint souple 3 peut être également thermocomprimé au moins partiellement pour diminuer l'épaisseur d'une ou plusieurs parties du joint. La souplesse du joint lui permet de combler les irrégularités du contour de l'orifice ainsi que les intervalles de tolérance de positionnement des tôles constitutives du contour dudit orifice sur lequel le joint est pressé. Comme on le déduit à partir de l'écorché de la pièce illustrée à la figure 1, le joint souple 3 a un fond 31 en majeure partie plat avec un contour hexagonal similaire précisément au contour d'une section transversale correspondante de l'orifice OR et un rebord périphérique 32 qui est apte à être appliqué contre tous les côtés de l'orifice OR.

Selon la réalisation illustrée, le rebord 32 du joint souple est pyramidal tronqué pour qu'après la pose du joint dans l'orifice OR dans la tôle, le rebord 32 soit parallèle aux parois de l'orifice. Grâce à sa souplesse, le rebord 32 du joint souple est appliqué contre les parois correspondantes de l'orifice OR dans la tôle de manière à compenser des tolérances dimensionnelles entre le squelette 2 et l'orifice OR.

En particulier selon la première réalisation illustrée à aux figures 1, 2 et 3, le squelette 2 comble grossièrement l'orifice en laissant libre une partie du rebord 32 du joint souple qui est constituée par un côté longitudinal 33 du rebord 32 situé à droite dans les figures et qui ne recouvre pas de partie du squelette. Les autres parties du rebord 32 du joint souple 3 constituées par l'autre côté longitudinal du rebord 32 situé à gauche dans les figures et les côtés transversaux du rebord 32 recouvrent le rebord 22 du squelette 2. Le rebord 22 du squelette 2 ne comporte pas de côté longitudinal à droite dans les figures. La matière utilisée pour constituer le joint souple d'étanchéité acoustique particulièrement au niveau du côté longitudinal 33 du rebord 32 ne recouvrant pas le squelette 2 peut être soumise à une contrainte supplémentaire contre la paroi correspondante de l'orifice OR pour assurer une bonne étanchéité acoustique en s'appliquant intimement sur la surface irrégulière de la paroi de l'orifice.

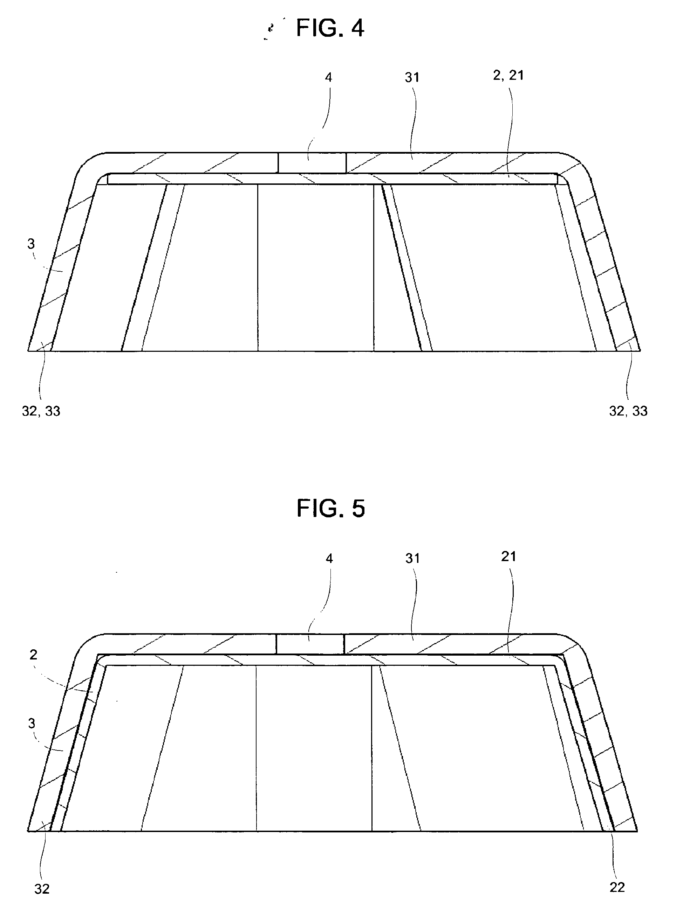

Selon la deuxième réalisation, le squelette 2 ne comporte aucun rebord et n'est constitué que par le fond 21 recouvert par le fond 31 du joint souple 3, comme illustré à la figure 4. Selon une variante la deuxième réalisation, le squelette 2 ne comporte pas de côtés longitudinaux et comporte, outre le fond 31, un rebord 22 n'ayant qu'un côté transversal recouvert par un côté transversal du rebord 32 du joint souple 3 ou que deux côtés transversaux recouverts respectivement par les côtés transversaux du rebord 32. Dans ces réalisations, le rebord 32 du joint souple 3 comporte des côtés longitudinaux ne recouvrant pas le squelette 2.

Selon la troisième réalisation montrée à la figure 5, le squelette 2 comprend un rebord 22 n'ayant que deux côtés longitudinaux, et le joint souple 3 comprend un rebord 32 dont un ou deux côtés transversaux ne recouvrent pas le squelette 2 et dont les côtés longitudinaux recouvrent respectivement les côtés longitudinaux du rebord 22 du squelette 2.

Le joint 3 peut présenter un ou plusieurs trous, comme le trou 4 dans le fond 31 montré aux figures 1, 2, 4 et 5, pour recevoir par exemple une tête de rivet ou de boulon. En variante, un trou du joint est prolongé coaxialement par un trou dans le squelette 2 afin que ces trous soient traversés à force et donc de manière hermétique par exemple par la tige d'un boulon ou de tout autre élément de fixation.

Les deux éléments 2 et 3 composant la pièce d'isolation acoustique 1 sont intimement liés sur tout ou partie de leurs faces complémentaires en regard. Par exemple, le squelette 2 est préalablement positionné dans le moule dans lequel la matière thermoplastique est thermoformée sur le squelette en le joint souple 3. Lors du thermoformage éventuellement accompagné d'une thermocompression, les faces en regard du squelette 2 et du joint 3 étant chaudes, elles adhèrent naturellement l'une sur l'autre sans apport d'un agent adhésif.

En variante les matières du squelette et du joint 3 sont convoyées l'une au-dessus de l'autre et subissent simultanément une découpe et un thermoformage, éventuellement accompagné d'une thermocompression, avec une thermosoudure entre elles au cours d'une seule opération selon un procédé connu appelé "twin-sheet".

Selon une autre réalisation qui convient lorsque le joint souple est préalablement réalisé, l'une ou des faces du joint et du squelette destinées à venir en contact ou ces deux faces subissent un traitement de surface tel qu'un flammage qui permet en oxydant les surfaces d'augmenter la tension superficielle des matières pour qu'elles adhérent l'une à l'autre par thermo-pression du joint sur le squelette. Cette autre réalisation est particulièrement bien adaptée si la matière du squelette a un point de fusion différent de la matière du joint souple, le traitement de surface de type flammage permettant la fusion entre les deux matières.

Selon d'autres réalisations, le joint souple est solidarisé au squelette par application d'un agent adhésif de type colle acrylique sur l'une des faces venant en contact du joint souple et du squelette.

Selon une variante montrée aux figures 1 et 3, la pièce d'isolation acoustique 1 présente au moins une et en général plusieurs petites cavités fermées 5 emprisonnant de l'air entre le squelette 2 et le joint souple 3 ce qui améliore les caractéristiques d'absorption acoustique de la pièce. Une ou plusieurs cavités 5 peuvent être comblées par un matériau de faible densité et aux caractéristiques d'absorption acoustique remarquables. Par exemple, les cavités 5 sont cubiques et situées en saillie sur le fond 11 de la pièce. Leur hauteur est de quelques millimètres. Chaque cavité 5 est formée par une saillie creuse 34 thermoformée dans le fond souple 31 du joint et est fermée par le fond plus rigide 21 du squelette 2. En variante, les cavités fermées sont cylindriques, parallélépipédiques rectangles, tronconiques ou plus généralement polyédriques.

## Revendications

1. Pièce d'isolation acoustique (1) pour obturer un orifice (OR) comprenant un premier élément (2) en une matière thermoplastique conférant de la rigidité à la pièce et un deuxième élément (3) en matière thermoplastique plus souple superposé au premier élément, la matière thermoplastique du deuxième élément (3) résultant d'un thermoformage et au moins une partie (31, 32) d'une face du deuxième élément étant intimement liée à une face du premier élément, **caractérisée en ce que** le deuxième élément (3) comprend un rebord (32) ayant au moins une partie (33) ne recouvrant pas le premier élément (2).

2. Pièce conforme à la revendication 1, dans laquelle le premier élément (2) est en une mousse de polyoléfine.

3. Pièce conforme à la revendication 1 ou 2, dans laquelle le deuxième élément (3) a une masse surfacique plus faible que celle du premier élément (2).

4. Pièce conforme à l'une quelconque des revendications 1 à 3, dans laquelle le deuxième élément (3) est en une mousse de polyoléfine.

5. Pièce conforme à l'une quelconque des revendications 1 à 4, comprenant au moins une cavité fermée (5) emprisonnant de l'air entre le premier élément (2) et le deuxième élément (3).

6. Pièce conforme à la revendication 5, dans laquelle la cavité (5) est comblée par un matériau de faible densité.

7. Pièce conforme à l'une quelconque des revendications 1 à 6, dans laquelle les éléments (2, 3) de la pièce sont reliés par fusion des matières thermoplastiques.

8. Pièce conforme à l'une quelconque des revendications 1 à 6, dans laquelle les éléments (2, 3) sont reliés par flammage de l'une des faces en contact des éléments.

9. Pièce conforme à l'une quelconque des revendications 1 à 6, dans laquelle les éléments (2, 3) sont reliés par application d'un agent adhésif sur l'une des faces en contact des éléments.

10. Procédé de fabrication d'une pièce d'isolation acoustique (1) pour obturer un orifice (OR) comprenant un premier élément (2) en une matière thermoplastique conférant de la rigidité à la pièce et un deuxième élément (3) en matière thermoplastique plus souple superposé au premier élément, **caractérisé en ce qu'**il comprend un positionnement du premier élément (2) dans un moule, un thermoformage de la matière thermoplastique plus souple ayant une masse surfacique plus faible que celle du premier élément (2) sur le premier élément pour produire le deuxième élément (3), et une liaison intime d'une face du premier élément à au moins une partie (31, 32) d'une face du deuxième élément (3) comprenant un rebord (32) ayant au moins une partie (33) ne recouvrant pas le premier élément (2).

11. Procédé de fabrication d'une pièce d'isolation acoustique (1) pour obturer un orifice (OR) comprenant un premier élément (2) en une matière thermoplastique conférant de la rigidité à la pièce et un deuxième élément (3) en matière thermoplastique plus souple superposé au premier élément, **caractérisé en ce que** les matières du premier élément (2) et du deuxième élément (3) sont convoyées l'une au-dessus de l'autre et subissent simultanément une découpe et un thermoformage avec une thermosoudure entre elles au cours d'une seule opération, le deuxième élément (3) comprenant un rebord (32) ayant au moins une partie (33) ne recouvrant pas le premier élément (2).

12. Procédé conforme à la revendication 10 ou 11, comprenant une thermocompression au moins d'une partie de la matière thermoplastique du deuxième élément (3).

## Claims

1. Soundproofing part (1) for plugging an orifice (OR), comprising a first element (2) made of a thermoplastic material giving rigidity to the part and a second element (3) made of a more flexible thermoplastic material superposed on the first element, the thermoplastic material of the second element (3) resulting from a thermoforming process and at least one portion (31, 32) of a face of the second element being closely connected to a face of the first element, **characterised in that** the second element (3) comprises a rim (32) having at least one portion (33) which does not cover the first element (2).

2. Part according to claim 1, wherein the first element (2) is a polyolefin foam.

3. Part according to either claim 1 or claim 2, wherein the mass per unit area of the second element (3) is lower than that of the first element (2).

4. Part according to any one of claims 1 to 3, wherein the second element (3) is a polyolefin foam.

5. Part according to any one of claims 1 to 4, comprising at least one closed cavity (5) which traps air between the first element (2) and the second element (3).

6. Part according to claim 5, wherein the cavity (5) is filled with a low-density material.

7. Part according to any one of claims 1 to 6, wherein the elements (2, 3) of the part are connected by fusing the thermoplastic materials.

8. Part according to any one of claims 1 to 6, wherein the elements (2, 3) are connected by flame treatment of one of the contacting faces of the elements.

9. Part according to any one of claims 1 to 6, wherein the elements (2, 3) are connected by applying an adhesive to one of the contacting faces of the elements.

10. Method for producing a soundproofing part (1) for plugging an orifice (OR), said part comprising a first element (2) made of a thermoplastic material giving rigidity to the part and a second element (3) made of a more flexible thermoplastic material superposed on the first element, **characterised in that** the method comprises positioning the first element (2) in a mould, thermoforming the more flexible thermoplastic material having a lower mass per unit area than that of the first element (2) on the first element to produce the second element (3), and connecting a face of the first element closely to at least one portion (31, 32) of a face of the second element (3) comprising a rim (32) having at least one portion (33) which does not cover the first element (2).

11. Method for producing a soundproofing part (1) for plugging an orifice (OR), said part comprising a first element (2) made of a thermoplastic material giving rigidity to the part and a second element (3) made of a more flexible thermoplastic material superposed on the first element, **characterised in that** the materials of the first element (2) and of the second element (3) are transported one above the other and are simultaneously subjected to cutting and thermoforming with heat welding between the materials during a single operation, the second element (3) comprising a rim (32) having at least one portion (33) which does not cover the first element (2).

12. Method according to either claim 10 or claim 11, comprising thermocompression at least of a portion of the thermoplastic material of the second element (3).

## Patentansprüche

1. Schallschutzbauteil (1) zum Verschließen einer Öffnung (OR), das ein erstes Element (2) aus einem thermoplastischen Stoff, das dem Bauteil Steifheit verleiht, und ein zweites Element (3) aus elastischerem thermoplastischem Stoff enthält, das über dem ersten Element angeordnet ist, wobei der thermoplastische Stoff des zweiten Elements (3) aus einer Thermoformung resultiert, und mindestens ein Teil (31, 32) einer Seite des zweiten Elements eng mit einer Seite des ersten Elements verbunden ist, **dadurch gekennzeichnet, dass** das zweite Element (3) eine Randleiste (32) mit mindestens einem Teil (33) enthält, der das erste Element (2) nicht bedeckt.

2. Bauteil nach Anspruch 1, bei dem das erste Element (2) aus einem Polyolefinschaum besteht.

3. Bauteil nach Anspruch 1 oder 2, bei dem das zweite Element (3) eine geringere flächenbezogene Masse hat als diejenige des ersten Elements (2).

4. Bauteil nach einem der Ansprüche 1 bis 3, bei dem das zweite Element (3) aus einem Polyolefinschaum besteht.

5. Bauteil nach einem der Ansprüche 1 bis 4, das mindestens einen geschlossenen Hohlraum (5) enthält, der Luft zwischen dem ersten Element (2) und dem zweiten Element (3) einschließt.

6. Bauteil nach Anspruch 5, bei dem der Hohlraum (5) mit einem Werkstoff geringer Dichte gefüllt ist.

7. Bauteil nach einem der Ansprüche 1 bis 6, bei dem die Elemente (2, 3) des Bauteils durch Schmelzen der thermoplastischen Stoffe verbunden werden.

8. Bauteil nach einem der Ansprüche 1 bis 6, bei dem die Elemente (2, 3) durch Beflammen einer der in Kontakt stehenden Seiten der Elemente verbunden werden.

9. Bauteil nach einem der Ansprüche 1 bis 6, bei dem die Elemente (2, 3) durch Aufbringen eines Klebers auf eine der in Kontakt stehenden Seiten der Elemente verbunden werden.

10. Verfahren zur Herstellung eines Schallschutzbauteils (1) zum Verschließen einer Öffnung (OR), das ein erstes Element (2) aus einem thermoplastischen Stoff, das dem Bauteil Steifheit verleiht, und ein zweites Element (3) aus elastischerem thermoplastischem Stoff enthält, das über dem ersten Element angeordnet ist, **dadurch gekennzeichnet, dass** es eine Positionierung des ersten Elements (2) in einer Form, ein Thermoformen des elastischeren thermoplastischen Stoffs, der eine geringere flächenbezogene Masse als derjenige des ersten Elements (2) hat, auf dem ersten Element, um das zweite Element (3) zu erzeugen, und eine enge Verbindung einer Seite des ersten Elements mit mindestens einem Teil (31, 32) einer Seite des zweiten Elements (3) enthält, der eine Randleiste (32) mit mindestens einem Teil (33) enthält, der das erste Element (2) nicht bedeckt.

11. Verfahren zur Herstellung eines Schallschutzbauteils (1) zum Verschließen einer Öffnung (OR), das ein erstes Element (2) aus einem thermoplastischen Stoff, das dem Bauteil Steifheit verleiht, und ein zweites Element (3) aus elastischerem thermoplastischem Stoff enthält, das über dem ersten Element angeordnet ist, **dadurch gekennzeichnet, dass** die Stoffe des ersten Elements (2) und des zweiten Elements (3) einer über dem anderen befördert werden und gleichzeitig ein Schneiden und ein Thermoformen mit einem Heißsiegeln aneinander in einem einzigen Vorgang erfahren, wobei das zweite Element (3) eine Randleiste (32) mit mindestens einem Teil (33) enthält, der das erste Element (2) nicht bedeckt.

12. Verfahren nach Anspruch 10 oder 11, das eine Thermokompression mindestens eines Teils des thermoplastischen Stoffs des zweiten Elements (3) enthält.
